# FASCICULE DE BREVET EUROPEEN

(11) **EP 2 999 084 B1**
(45) Date de publication et mention de la délivrance du brevet: **17.01.2018**
(21) Numéro de dépôt: 15185775.2
(22) Date de dépôt: 18.09.2015
(51) Int. Cl.: H02J 9/06

(54) **DISPOSITIF D'INTERCONNEXION ÉLECTRIQUE POUR INVERSEUR DE SOURCE, ET INVERSEUR DE SOURCE COMPRENANT UN TEL DISPOSITIF**
ELEKTRISCHE VERBINDUNGSVORRICHTUNG FÜR STROMQUELLEN-UMSCHALTER, UND STROMQUELLEN-UMSCHALTER, DER EINE SOLCHE VORRICHTUNG UMFASST
ELECTRICAL INTERCONNECTION DEVICE FOR SOURCE INVERTER, AND SOURCE INVERTER COMPRISING SUCH A DEVICE

(30) Priorité: 18.09.2014 FR 1458832
(43) Date de publication de la demande: 23.03.2016
(73) Titulaire: Schneider Electric Industries SAS, 92500 Rueil-Malmaison (FR)
(72) Inventeur: NEYRET, Yannick, 38050 GRENOBLE Cedex 09 (FR)
(74) Mandataire: Lavoix

(56) Documents cités:
- EP-A2- 2 763 260
- WO-A1-2008/113049
- US-A1- 2014 208 129
- US-B1- 6 330 176

## Description

La présente invention telle qu'elle est définie dans la revendication indépendante 1 concerne un dispositif d'interconnexion destiné à améliorer la sureté de fonctionnement et faciliter, dans un inverseur de source, l'interconnexion des différents constituants de la fonction inversion de source, et un inverseur de source comprenant ce dispositif d'interconnexion. Elle trouve une application notamment aux réseaux de distribution d'énergie électrique dans lesquels il est nécessaire de pouvoir basculer d'une source d'alimentation électrique à une autre, en cas de défaillance de l'une des sources, par exemple dans des établissements hospitaliers.

D'une façon générale, certains réseaux de distribution d'énergie électrique doivent permettre d'assurer la continuité de l'alimentation en énergie électrique lorsque la source d'alimentation est défaillante. On prévoit donc une ou plusieurs sources d'alimentation alternative ou de secours, destinées à suppléer la source d'alimentation principale en cas de problèmes.

Dans ce but, un tel réseau est pourvu d'un dispositif inverseur de source permettant le basculement, généralement de façon automatique, sur une source d'alimentation alternative ou de secours lorsque la source d'alimentation principale est défaillante.

On comprend bien l'importance de la sureté de fonctionnement du dispositif inverseur de source dans un tel réseau de distribution d'énergie électrique, et par conséquent l'importance d'une installation, en particulier du câblage, fiable et sécurisée d'un tel dispositif. Un exemple d'un dispositif analogue est cité dans le document US 6 330 176 B1. Pour mettre en oeuvre un dispositif inverseur de source, par exemple de forte puissance en basse tension, une solution courante consiste en l'utilisation d'un contrôleur électronique et d'au moins deux appareils de commutation, par exemple des disjoncteurs, donc des appareils bistables, qui peuvent être des disjoncteurs ouverts débrochables. Ces appareils de contrôle et de coupure doivent être complétés de plusieurs autres pour proposer une fonction complète et sure : protection des circuits internes, appareils de mesure et de commande, fourniture d'énergie électrique auxiliaire, sécurisation de cette énergie électrique auxiliaire, surveillance des raccordements et des appareils.

Le nombre de signaux de contrôle et de retour d'état reçus par le contrôleur augmente fortement selon le type d'appareil de commutation.

Un appareil de commutation de type contacteur nécessite un signal de commande, et un signal de retour d'état de la commande.

Un appareil de commutation bistable, tel qu'un interrupteur motorisé nécessite deux signaux de commande (ouverture, fermeture), un signal de retour d'état de la commande (ouvert/fermé).

Un appareil bistable à mécanisme à ressort (disjoncteur ouvert par exemple) nécessite deux signaux de commande (ouverture, fermeture), deux signaux de retour d'état de commande (ouvert/fermé, ressort chargé). En outre, lorsque cet appareil est un appareil de protection (disjoncteur par exemple), un retour d'état supplémentaire de défaut électrique est nécessaire. Et puisque la mesure de tension est raccordée en amont de cette protection, il convient d'ajouter un petit appareil de protection sur les câbles de mesure de tension et de connaitre l'état de cet appareil par un signal de retour supplémentaire.

Enfin, un appareil bistable débrochable à mécanisme à ressort (disjoncteur ouvert par exemple) nécessite deux signaux de commande (ouverture, fermeture), quatre signaux de retour d'état (ouvert/fermé, défaut électrique, ressort chargé, embroché) et un signal de retour d'état de l'appareil de protection de la mesure de tension comme expliqué ci-dessus.

En outre, pour limiter les courants d'appel et les perturbations sur les tensions d'alimentation des appareils électroniques, il est préférable de mettre en oeuvre un système à deux niveaux de tensions auxiliaires : basse tension pour commander les appareils de commutation (par exemple 230VAC ou 400VAC) et très basse tension pour les signaux de contrôle et monitoring (par exemple 24VDC).

Enfin, il est nécessaire de protéger l'installation par un système d'inter-verrouillage qui peut être électrique et qui interviendra en cas d'opération manuelle sur les appareils de commutation ou en cas de défaillance du contrôleur.

On comprend donc que le temps d'étude et de montage, notamment de câblage, et de test peut être très important.

Par ailleurs, de nombreux contrôleurs sont commercialisés, dont le nombre d'entrées/sorties est insuffisant pour des inverseurs de sources à base de disjoncteurs ouverts débrochables.

Concernant les contrôleurs disposant du nombre d'entrée/sorties suffisant, la plupart ne sont pas faciles à mettre en oeuvre avec des disjoncteurs, encore moins avec des disjoncteurs ouverts débrochables, sans explications détaillées. Ceci peut conduire à des erreurs d'installation, avec notamment l'oubli d'une partie des autres éléments nécessaires à la réalisation d'une fonction inverseur de source complète et sure.

Il n'est pas rare que la mise en oeuvre de ces dispositifs requière plus de 150 points de connexion à installer et tester.

Il en résulte que les acteurs concernés par la mise en oeuvre de ces dispositifs, non seulement passent beaucoup de temps sur cette mise en oeuvre (plusieurs heures d'études et de câblage), mais également sont susceptibles de livrer une fonction inverseur de source incomplètement testée et présentant des modes de défaillances cachés, voire de simplifier le schéma du système qui présentera alors de graves risques de disfonctionnement.

Les risques liés à une mauvaise installation du dispositif inverseur sont les coupures d'alimentation dues à un mauvais câblage du contrôleur, la casse d'un générateur due à un couplage non synchronisé, une panne cachée rendant le contrôleur inopérant le jour où l'on en a vraiment besoin, avec dans certains cas une perte d'argent très importante, voire des accidents sur les personnes pouvant aller jusqu'à la mort.

La demanderesse a connaissance d'au moins un incident par an, de type basculement de source incomplètement exécuté dans un réseau d'alimentation en énergie électrique d'un hôpital en Europe, qui met à chaque fois en jeu la vie de certains patients.

Au moins un cas connu par la demanderesse parmi ces incidents était lié à un mauvais câblage par l'installateur du dispositif d'inversion de source.

Certains produits connus présentent des améliorations intéressantes au niveau du contrôleur, mais ne traitent pas de ces questions de mise en oeuvre longue et fastidieuses présentées plus haut.

D'autres produits connus apportent une réponse partielle à ces problèmes, en intégrant l'alimentation auxiliaire, sans que celle-ci ne soit cependant sécurisée dans toutes les configurations de fonctionnement. Par exemple, lorsque les deux sources d'alimentation principales sont indisponibles, le contrôleur n'est plus alimenté et l'utilisateur n'est pas informé de la poursuite du transfert de source.

Enfin, certaines notices de mise en oeuvre connues, n'abordent pas ou très partiellement ces questions d'interconnexion des contrôleurs avec les autres appareils ou ne font pas mention d'un système d'inter-verrouillage électrique ou le suppriment en cas de transition fermée (dans certains cas aussi appelée transition à couplage fugitif).

Les appareils complémentaires aux appareils de commutation et au contrôleur sont généralement de dimensions significative, ce qui pose problème lors de l'installation dans un tableau électrique dans lequel l'espace est fortement réduit. Ils nécessitent généralement un câblage dans lequel certains câbles non protégés raccordés aux entrées des protections auxiliaires sont d'une longueur trop importante, contraire aux règles de l'art, et présentant des risques pour les biens et les personnes.

Un des buts de l'invention est donc de résoudre les problèmes précités. Ainsi, l'invention a notamment pour objectif de proposer un dispositif facilitant la mise en oeuvre d'un inverseur de source comprenant un contrôleur et deux appareils de commutation tels que des disjoncteurs, éventuellement ouverts, de forte puissance et débrochables, avec un niveau de fiabilité élevé dans la mise en oeuvre, donc un niveau de sureté de fonctionnement élevé.

Ainsi, l'invention a pour objet, selon un premier aspect, un dispositif d'interconnexion destiné à sécuriser et faciliter, dans un dispositif inverseur de source, le raccordement d'un contrôleur et d'au moins deux appareils de commutation aptes à assurer la commutation vers respectivement deux sources d'alimentation électrique.

Le dispositif d'interconnexion comprend un support, tel qu'une platine, sur lequel sont montés au moins deux connecteurs de source et au moins un connecteur de contrôle destinés à permettre respectivement la connexion de deux appareils de commutation et d'un contrôleur au dispositif d'interconnexion, et le support comprend un pré-câblage des connecteurs de source et de contrôle en sorte de permettre, lorsqu'un contrôleur et deux appareils de commutation sont connectés au dispositif d'interconnexion respectivement par les connecteurs de contrôle et de source, le contrôle par ledit contrôleur de la commutation vers l'une ou l'autre de deux sources d'alimentation électrique via l'un ou l'autre des deux appareils de commutation.

Suivant certains modes de réalisation, le dispositif comprend en outre une ou plusieurs des caractéristiques suivantes, prise(s) isolément ou suivant toutes les combinaisons techniquement possibles :
- un relais d'adaptation de tension est monté sur le support et précablé de façon à permettre la transmission d'au moins un signal d'entrée ou sortie d'un contrôleur connecté au support par le connecteur vers ou provenant de deux appareils de commutation connectés au support respectivement par les connecteurs, lorsque ce signal doit être isolé ou adapté en tension, notamment dans le cas de la transmission d'un signal basse tension provenant d'un des appareils de commutation vers une entrée très basse tension du contrôleur ou d'un signal très basse tension provenant d'une sortie du contrôleur vers une entrée de commande basse tension d'un des appareils de commutation ;
- le support comprend un pré-câblage du connecteur de contrôle et des deux connecteurs de source, en sorte de permettre, lorsqu'un contrôleur et deux appareils de commutation sont connectés au dispositif d'interconnexion respectivement par les connecteurs de contrôle et de source, l'inter-verrouillage des deux appareils de commutation interdisant la fermeture de l'un des deux appareils de commutation lorsque l'autre est déjà fermé et interdisant le couplage des deux sources d'alimentation reliées respectivement aux deux appareils de commutation ;

- le pré-câblage permettant l'inter-verrouillage comprend plusieurs contacts électriques et est réalisé en sorte de permettre de désactiver temporairement la fonction d'inter-verrouillage pré-câblée par ouverture de l'un desdits contacts électriques ;
- un connecteur d'alimentation auxiliaire, destiné à permettre la connexion d'au moins un dispositif d'alimentation auxiliaire électrique, de préférence sécurisée, par exemple au moyen d'une batterie, au dispositif d'interconnexion, est monté sur le support, et le support comprend un pré-câblage du connecteur d'alimentation auxiliaire et du connecteur de contrôle en sorte de permettre, lorsqu'un contrôleur et un dispositif d'alimentation auxiliaire sont connectés au dispositif d'interconnexion respectivement par le connecteur de contrôle et le connecteur d'alimentation auxiliaire, l'alimentation électrique du contrôleur ;
- le support comprend un pré-câblage du connecteur d'alimentation auxiliaire et du connecteur de contrôle en sorte de permettre, lorsqu'un contrôleur et un dispositif d'alimentation auxiliaire sont connectés au dispositif d'interconnexion respectivement par le connecteur de contrôle et le connecteur d'alimentation auxiliaire, la transmission au contrôleur d'au moins un signal d'état provenant du dispositif d'alimentation sécurisée, tel qu'un signal de défaut de charge de la batterie ;
- le dispositif d'interconnexion comprend un dispositif d'inversion auxiliaire monté sur le support et comportant au moins un élément de commutation auxiliaire et au moins un relais de contrôle, et le support comprend un pré-câblage de ce dispositif d'inversion auxiliaire, du connecteur de contrôle et des deux connecteurs de source, en sorte de permettre, lorsque deux appareils de commutation sont connectés au dispositif de d'interconnexion respectivement par les connecteurs, d'alimenter les circuits de contrôle commande et/ou l'inter-verrouillage électrique des appareils de commutation dès que l'une des deux sources d'alimentation électrique est disponible, et, lorsqu'en outre un contrôleur est connecté au dispositif de d'interconnexion par le connecteur de contrôle, et quand les deux sources sont disponibles, de sélectionner la source d'alimentation des circuits de contrôle commande des appareils de commutation ;
- un connecteur de sélection de tension est monté sur le support, et le support comprend un pré-câblage du connecteur de sélection de tension et d'au moins un des connecteurs de source, en sorte de permettre l'alimentation, sur plusieurs niveaux de tension, d'au moins l'appareils de commutation connecté au dispositif d'interconnexion par ledit connecteur de source ;
- un des connecteurs de source, de contrôle, et d'alimentation auxiliaire, et/ou un des relais d'adaptation de tension, est connecté à un câble, ou une nappe de câbles, de raccordement destiné à raccorder ledit connecteur respectivement à l'un des deux appareils de commutation, au contrôleur, et au premier dispositif d'alimentation auxiliaire, et/ou à raccorder ledit relais à l'un des deux appareils de commutation et au contrôleur ;
- la connexion du câble, ou de la nappe de câbles, de raccordement au connecteur ou au relais d'adaptation correspondant se fait par l'intermédiaire d'un connecteur détrompé, ou d'une cosse pré-repérée, en l'une des extrémités dudit câble, ou de ladite nappe de câbles, de raccordement ;
- le support comprend un pré-câblage des connecteurs de source et/ou de contrôle et/ou d'alimentation auxiliaire, comprenant par exemple une boucle de courant passant par ledit ou lesdits connecteurs de source, et/ou de contrôle, et/ou d'alimentation auxiliaire et/ou par le relais d'adaptation, en sorte de permettre, lorsqu'un contrôleur et/ou deux appareils de commutation, et/ou un dispositif d'alimentation auxiliaire sont connectés au support au moyen d'un ou respectivement de plusieurs câbles, ou nappes de câbles, de raccordement connectés audit ou respectivement auxdits connecteurs de source, et/ou de contrôle, et/ou d'alimentation auxiliaire, de détecter la bonne connexion du ou des câbles, ou nappes de câbles de raccordement audit ou respectivement auxdits connecteurs de source, et/ou de contrôle et/ou d'alimentation auxiliaire, par monitorage de la boucle de courant par le contrôleur ;

L'invention a également pour objet, selon un deuxième aspect, un dispositif inverseur de source comprenant un contrôleur et au moins deux appareils de commutation destinés à assurer la commutation vers respectivement deux sources d'alimentation électrique, le contrôleur étant apte à contrôler le basculement d'une source vers l'autre en contrôlant les deux appareils de commutation.

Le dispositif inverseur de source comprend un dispositif d'interconnexion tel que présenté plus haut, sur lequel sont connectés le contrôleur et des deux appareils de commutation respectivement par les connecteurs de contrôle et de source, en sorte de permettre le contrôle par ledit contrôleur de la commutation vers l'une ou l'autre de deux sources d'alimentation électrique via l'un ou l'autre des deux appareils de commutation.

L'invention a encore pour objet, selon un troisième aspect, un réseau de distribution d'énergie électrique provenant de l'une ou l'autre de deux sources d'alimentation électrique, ce réseau comprenant un dispositif inverseur de source tel que présenté ci-dessus, en sorte de permettre le basculement de l'une vers l'autre des deux sources d'alimentation électrique pour alimenter ledit réseau.

Ainsi, le dispositif d'interconnexion de l'invention permet, en figeant les possibilités de câblage, en prenant en compte tous les signaux nécessaires à la sécurité, et en réalisant les raccordements nécessaires, d'éliminer les erreurs d'installation et d'augmenter la sureté de fonctionnement d'un dispositif inverseur de source.

Le dispositif d'interconnexion peut être qualifié en laboratoire et testé en production, pour garantir à l'installateur son bon fonctionnement, sans avoir besoin de réaliser une inspection approfondie lors de l'installation, donc avec un gain de temps d'installation et de mise en oeuvre important.

Le dispositif d'interconnexion, avec sa platine centrale, et avec les câbles associés, se substitue à plus de 150 points de connexion nécessaires pour la mise en oeuvre habituellement.

Alors qu'une mise en oeuvre du câblage (test inclus) dure habituellement 10 à 12 heures, le dispositif selon l'invention permet une mise en oeuvre réduite à seulement environ une heure, sans risque d'erreur cachée.

Le dispositif de l'invention ne laisse aucune possibilité à un installateur de se tromper ou de modifier pour simplifier dangereusement, l'installation, et garantit le bon fonctionnement d'une partie critique d'une architecture de distribution d'énergie électrique.

Le dispositif d'interconnexion permet d'optimiser les longueurs de câbles dans toutes les configurations possibles de tableaux d'installation électrique : appareils de commutation proches ou distants du contrôleur, appareils de commutation proches ou distants l'un de l'autre.

Facile à installer dans un tableau électrique, le dispositif d'interconnexion, déporté du contrôleur, n'alourdit pas ce tableau et permet de réduire le câblage au niveau de la charnière de la porte du tableau.

Destiné à prendre une position centrale, le dispositif d'interconnexion n'impose pas de positionner un objet volumineux à proximité des appareils de commutation et des jeux de barres qui les raccordent.

Les caractéristiques et avantages de l'invention apparaitront à la lecture de la description qui va suivre, donnée uniquement à titre d'exemple, et non limitative, en référence aux figures annexées suivantes :
- figure 1 : représentation schématique d'un exemple de dispositif inverseur de source selon l'invention ;
- figure 2 : représentation schématique d'un exemple de dispositif d'interconnexion pour la mise en oeuvre du dispositif inverseur de source de la figure 1 ;
- figures 3 à 5 : représentations schématiques de différents signaux dans un dispositif inverseur de source selon l'invention dans des variantes de réalisation ;
- figure 6 : représentation schématique d'un dispositif inverseur auxiliaire mis en oeuvre avec le dispositif inverseur de l'invention, dans une variante de réalisation.

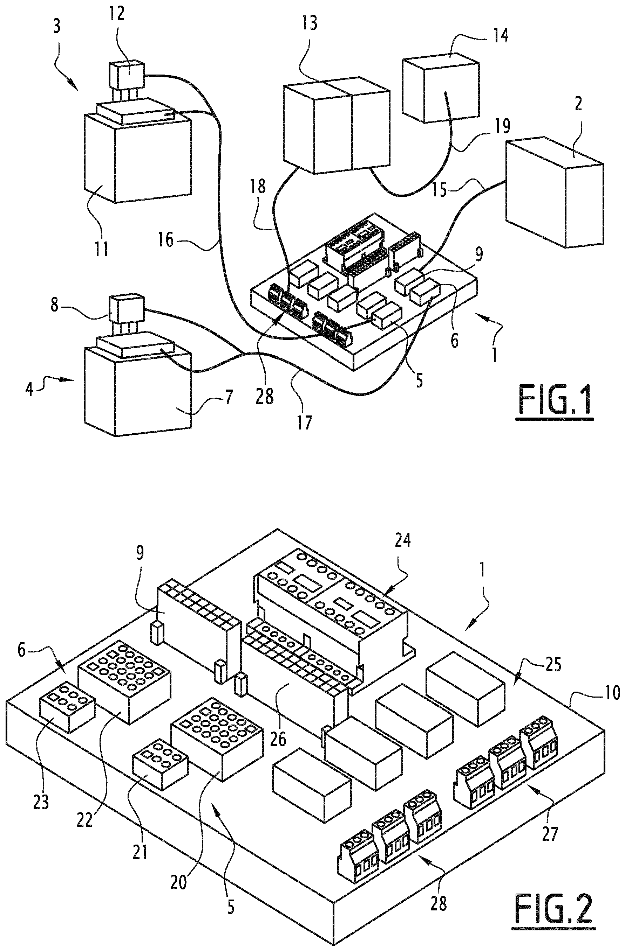

Sur la figure 1 est représenté schématiquement un exemple de dispositif inverseur de source selon l'invention, destiné à être installé dans un réseau de distribution d'énergie électrique disposant d'au moins deux sources alternatives, permanentes ou non, d'alimentation électrique, pour assurer le basculement de l'une vers l'autre des deux sources d'alimentation électrique pour l'alimentation du réseau électrique.

Ce dispositif inverseur de source comprend un contrôleur 2 et deux appareils de commutation 3, 4, par exemple de type disjoncteur 3, 4.

Le dispositif inverseur de source comprend un dispositif d'interconnexion 1 pourvu d'un certain nombre de connecteurs, dont quelques-uns sont référencés par les références 5, 6, 9 et 28, et qui sera décrit plus en détail ci-après en référence à la figure 2.

Ce dispositif inverseur de source comprend également deux appareils de commutation 3, 4, par exemple de type disjoncteur, qui sont destinés à assurer la commutation des deux sources d'alimentation électrique non représentées. Dans notre exemple, chaque appareil de commutation 3, 4 comprend un dispositif disjoncteur principal 7, 11 et un appareil de protection auxiliaire 8, 12 pour la mesure des sources d'alimentation en amont de 7, 11.

Par ailleurs, le dispositif inverseur de source comprend un contrôleur 2, qui est apte à contrôler le basculement d'une source vers l'autre en contrôlant les deux appareils de commutation 3, 4.

Dans l'exemple représenté à la figure 1, le dispositif inverseur comprend également un dispositif d'alimentation auxiliaire très basse tension sécurisée 13, mettant en oeuvre une batterie 14 reliée par un câble 19.

Ce dispositif d'alimentation auxiliaire électrique sécurisée 13 permet d'alimenter électriquement le contrôleur 2 via les câbles 18 puis 15.

Le dispositif d'interconnexion 1 intègre en outre un système de commutation permettant d'alimenter électriquement les bobines de contrôle et le moteur de rechargement du ressort des appareils de commutation 3, 4, appelés actuateurs des appareils de commutation 3, 4, en sorte que ces actuateurs soient alimentés dès qu'au moins une source d'alimentation est présente.

Tous ces appareils de commutation 3, 4 et d'alimentation auxiliaire 13, ainsi que le contrôleur 2, sont connectés au dispositif d'interconnexion 1, par l'intermédiaire des connecteurs appropriés respectifs 5, 6, 28, 9 sur le dispositif d'interconnexion 1, et des câbles, ou nappes de câbles, respectifs 16, 17, 18, et 15, reliant ces dispositifs 3, 4, 13, 2 aux connecteurs 5, 6, 28, 9 correspondant.

On peut prévoir la connexion des câbles, ou nappes de câbles, 16, 17, 18, et 15 aux connecteurs respectifs 5, 6, 9, 27, 28 correspondant, se fasse par l'intermédiaire de connecteurs détrompés, ou de cosses pré-repérées, en l'une des extrémités de ces câbles, ou nappes de câbles. 16, 17, 15, 18.

Comme on le voit plus en détail sur la figure 2, le dispositif d'interconnexion 1 comprend un support 10, tel qu'une platine 10, sur lequel sont montés différents connecteurs, dont les connecteurs 5, 6, 28, 9 présentés plus haut, qui sont par ailleurs pré-câblés dans le but d'assurer, une fois reliés aux différents dispositifs correspondant, certaines fonctions.

Ainsi, deux connecteurs de source 5, 6 et un connecteur de contrôle 9 sont montés sur le support 10, permettant respectivement la connexion des deux appareils de commutation 3, 4 et du contrôleur 2 au dispositif d'interconnexion 1.

Le support comprend un pré-câblage des connecteurs de source 5, 6 et de contrôle 9, non visible sur les figures 1 et 2. Ce pré-câblage est réalisé de façon à permettre le contrôle par le contrôleur 2, connecté via le connecteur de contrôle 9, de la commutation vers l'une ou l'autre de deux sources d'alimentation électrique par l'intermédiaire de l'un ou l'autre des deux appareils de commutation 3, 4, connectés respectivement via les connecteurs de source 5, 6.

Le support comprend un pré-câblage des connecteurs de source 5, 6 et de contrôle 9, non visible sur les figures 1 et 2. Ce pré-câblage est réalisé de façon à permettre la détection par le contrôleur 2 du bon embrochage des connecteurs 5, 6 et 9, respectivement aux câbles ou nappes de câbles 16, 17, 15, au moyen d'au moins une boucle de courant qui passe par les connecteurs correspondant et qui est surveillée par le contrôleur 2.

Un pré-câblage du connecteur d'alimentation auxiliaire 28, non visible sur les figures 1 et 2, peut également être prévu dans le même but. Ce pré-câblage est ainsi réalisé de façon à permettre la détection par le contrôleur 2 du bon embrochage du connecteur d'alimentation auxiliaire 28 au câble ou à la nappe de câbles 18, au moyen d'au moins de la boucle de courant qui passe par ce connecteur d'alimentation auxiliaire 28, surveillée par le contrôleur 2.

Dans l'exemple représenté à la figure 2, on prévoit une série de connecteurs de sélection de tension 27 monté sur le support 10, pour permettre d'alimenter les circuits de commande des appareils de commutation 3, 4 sur plusieurs niveaux de tension et dans plusieurs configurations. Le support 10 comprend alors un pré-câblage, non visible sur les figures, d'un de ces connecteurs de sélection de tension 27, de l'un des connecteurs de source 5, 6.

Le support 10 comprend aussi des relais auxiliaires et un pré-câblage entre les connecteurs de source 5, 6 et le connecteur de contrôle 9, pour permettre l'adaptation de la tension d'un ou plusieurs des signaux d'état (basse tension) de l'appareil de commutation 3, 4 correspondant à une valeur de tension adaptée pour un signal d'entrée du contrôleur 2 (très basse tension). Le support 10 peut comprendre aussi des relais auxiliaires et un pré-câblage entre les connecteurs de source 5, 6 et le connecteur de contrôle 9, pour permettre l'adaptation de la tension d'un ou plusieurs des signaux de commande (très basse tension) du contrôleur 2 correspondant à une valeur de tension adaptée pour un signal d'entrée (basse tension) de l'appareil de commutation 3, 4.

Ainsi, un signal en provenance ou à destination de l'un des appareils de commutation 3, 4 peut être transformé (adapté) en un signal adapté au contrôleur 2. Cela évite de devoir raccorder des relais supplémentaires au dispositif d'inversion de source 5, et donc réduit le temps de mise en oeuvre et les risques d'erreurs et de pannes cachées.

On peut prévoir aussi que le support 10 comprenne un pré-câblage, non visible sur les figures, du connecteur de contrôle 9 et des deux connecteurs de source 5, 6, pour permettre l'inter-verrouillage des deux appareils de commutation 3, 4. Cette fonction de sécurité interdit la fermeture de l'un des deux appareils de commutation 3, 4 lorsque l'autre est déjà fermé, et interdit le couplage des deux sources d'alimentation reliées respectivement aux deux appareils de commutation 3, 4.

Cet inter-verrouillage électrique agit sur les bobines à ouverture des appareils de commutation 3, 4. Il rend effectivement impossible la fermeture de l'un des appareils de commutation 3, 4, par exemple par les boutons en face avant de l'appareil de commutation (respectivement 3, 4), si l'autre est déjà fermé (respectivement 4, 3). Il rend donc également impossible la création d'un couplage non synchronisé entre les deux sources d'alimentation reliées respectivement aux deux appareils de commutation 3, 4.

En particulier, cet inter-verrouillage rend impossible le raccordement d'un générateur, et prévient donc le risque de casse mécanique.

Egalement, cet inter-verrouillage rend impossible le couplage d'un générateur sur le réseau électrique extérieur, et prévient donc des risques de perturbation de ce réseau.

Cet inter-verrouillage électrique est activé en permanence et en l'absence d'énergie sur le contrôleur 2 afin d'augmenter la sûreté de fonctionnement de l'inverseur de source.

On peut néanmoins prévoir un pré-câblage et des relais permettant que cet inter-verrouillage soit désactivé temporairement par ouverture de l'un de ces contacts électriques.

Cette désactivation temporaire permet une transition fermée (dans certains cas aussi appelée transition à couplage fugitif) tout en préservant la sécurité des opérateurs et des installations en dehors de ces phases de transition souvent brèves et espacées dans le temps.

Habituellement, pour obtenir une transition fermée, il faut supprimer les moyens d'inter-verrouillage, ou éventuellement les installer sur les bobines à fermeture. Dans ce cas les risques d'opération manuelle dangereuse ne sont pas ou seulement partiellement prévenus. Avec cette variante de l'invention, l'inter-verrouillage reste présent et assure sa fonction de protection. Il suffit d'activer le relais en question pour désactiver temporairement cet inter-verrouillage.

Cet inter-verrouillage électrique sur bobines à ouverture, désactivé par ouverture d'un contact normalement fermé, est donc une garantie de sécurité dans le cas des inverseurs de source à transition fermée.

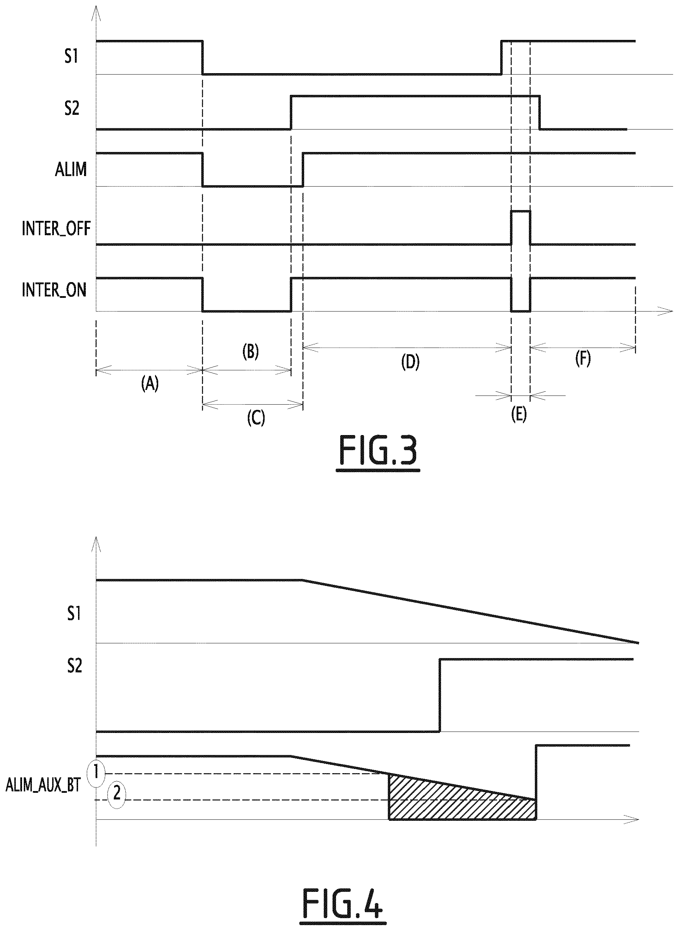

Comme on peut le voir sur la figure 3, sur une transition ouverte telle que représentée dans les phases A, C, D, l'inter-verrouillage est activé (L'état de l'inter-verrouillage est représenté par INTER_ON) dès que l'une ou l'autre source est présente, donc dans toutes les phases sauf la phase B. Par contre dans le cas d'une transition fermée (dans certain cas à couplage fugitif) telle que représentée dans les phases D, E, F, l'activation du signal INTER_OFF (phase E) a pour effet de désactiver l'inter-verrouillage le temps de la transition. Le signal INTER_OFF est lui-même désactivé dès que la transition est terminée ce qui réactive l'inter-verrouillage INTER_ON (phase F) et prévient à nouveau tout risque de fermeture simultanée des appareils de commutation principaux.

Comme on l'a vu plus haut déjà, en référence à la figure 1, on peut prévoir, monté(s) sur le support 10, un ou plusieurs connecteurs d'alimentation auxiliaire 28, dont au moins un permet la connexion, au dispositif d'interconnexion 1, d'un dispositif d'alimentation auxiliaire 13, de préférence sécurisé et mettant par exemple en oeuvre une batterie 14.

Le support comprend alors un pré-câblage, non visible sur les figures, du connecteur d'alimentation auxiliaire 28 en question et du connecteur de contrôle 9, pour permettre l'alimentation électrique du contrôleur 2.

Le support comprend aussi un pré-câblage, non visible sur les figures, du connecteur d'alimentation auxiliaire 28 en question et du connecteur de contrôle 9, pour la transmission au contrôleur des informations d'état du dispositif d'alimentation sécurisée 13 comme par exemple un signal de défaut de charge de la batterie.

Comme déjà évoqué plus haut, afin d'utiliser une alimentation secourue standard et de calibre raisonnable et pour limiter les courants d'appel et les perturbations sur les tensions d'alimentation des appareils électroniques, il est préférable de mettre en oeuvre un système à deux niveaux de tensions auxiliaires. Ainsi, une alimentation auxiliaire basse tension est mise en oeuvre pour les bobines de contrôle et le moteur de rechargement du ressort des appareils de commutation appelés actuateurs des appareils de commutation (par exemple 230VAC ou 400VAC). Par ailleurs, une alimentation auxiliaire très basse tension est mise en oeuvre pour les signaux de contrôle et de monitoring (par exemple 24VDC).

Pour assurer un fonctionnement optimal du dispositif inverseur de source, l'alimentation 13 du contrôleur électronique 2 doit être sécurisée et mettre en oeuvre une batterie 14. Et l'alimentation des actuateurs des appareils de commutation 3, 4 doit être présente dès que l'une des deux sources de puissance est présente.

Le support 10 peut intégrer le dispositif spécifique d'alimentation auxiliaire des actuateurs des appareils de commutation 3, 4.

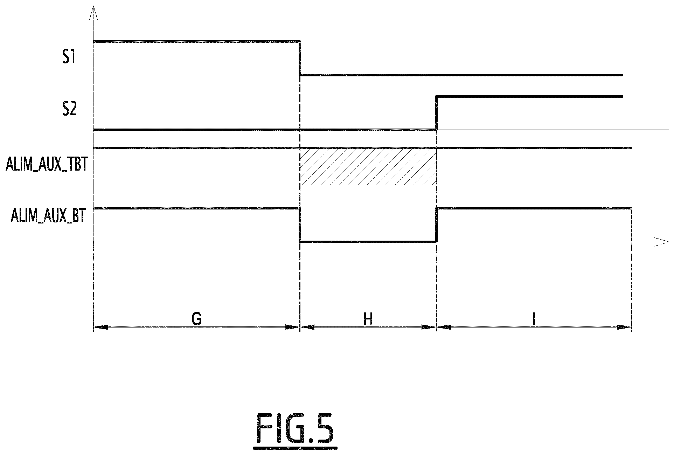

Ce mode de réalisation permet d'obtenir un graphique des signaux relatifs aux sources S1, S2, à l'alimentation auxiliaire basse tension (ALIM_AUX_BT) et à l'alimentation auxiliaire très basse tension (ALIM_AUX_TBT) tel que représenté sur la figure 5. L'alimentation auxiliaire basse tension (ALIM_AUX_BT) est présente dès que l'une des deux sources S1, S2 est disponible soit lors de phases G et I, et l'alimentation auxiliaire 13 très basse tension (ALIM_AUX_TBT) est présente en permanence grâce à la sécurisation au moyen de la batterie 14 en phase H.

Par comparaison, comme le montre la figure 4, un simple dispositif à contacteur (signal ALIM_AUX_BT) qui se connecterait de lui-même sur la source présente (signal S1), est susceptible de rester connecté sur cette source même si celle-ci voit sa tension descendre en dessous de la tension minimale de fonctionnement des actuateurs (bobines de contrôle et moteur de rechargement) de l'appareil de commutation relié à cette source. En effet, la tension de retombée des contacteurs (référencée 2 sur la figure 4) est inférieure à la tension minimale de fonctionnement des actuateurs (référencée 1 sur la figure 4).

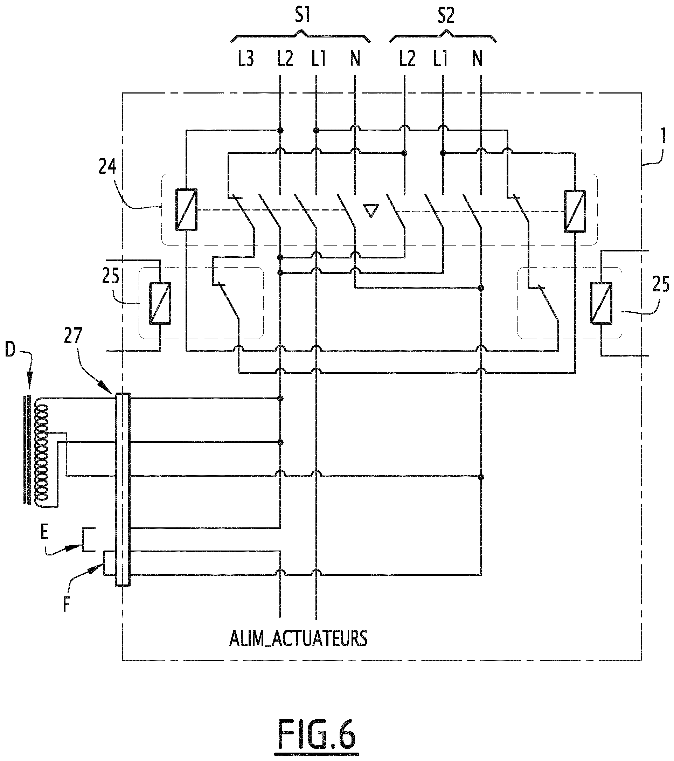

L'invention peut mettre en oeuvre, sur le support 10, un dispositif inverseur auxiliaire, détaillé sur la figure 6, connecté au dispositif d'interconnexion de la figure 2 et comprenant au moins un élément de commutation auxiliaire 24 et au moins un relais de contrôle 25.

Précisément, ce dispositif inverseur auxiliaire fournit l'énergie nécessaire (ALIM_ACTUATEURS) aux actuateurs des appareils de commutation 3, 4 et/ou à l'alimentation sécurisée 13.

Ce dispositif inverseur auxiliaire garantit la connexion sur la source S1 ou S2 présente, dès que l'une de ces deux sources S1, S2 est disponible, en l'absence de toute intervention du contrôleur 2, grâce à l'élément de commutation auxiliaire 24, et en même temps permet au contrôleur 2, si nécessaire, de choisir la source S1, S2 à utiliser quand les deux sont présentes au travers du ou des relais de contrôle 25.

Ce dispositif inverseur auxiliaire garantit le non couplage des deux sources S1, S2 par un inter-verrouillage mécanique intégré à l'élément de commutation auxiliaire 24.

Un tel dispositif inverseur auxiliaire piloté, permet donc au contrôleur 2 de désactiver une source S1, S2 si celle-ci descend en dessous du seuil de bon fonctionnement des actuateurs, sans empêcher le dispositif inverseur de se connecter librement à la première source S1, S2 présente en l'absence de contrôleur 2 en alimentant les circuits de contrôle commande de l'appareil de commutation 3, 4 correspondant.

Par comparaison, les dispositifs inverseurs auxiliaires connus permettent l'une ou l'autre des possibilités, mais pas la combinaison des deux sans l'ajout d'un dispositif électronique spécifique à la gestion de cet inverseur auxiliaire qui pourra présenter ses propres modes de défaillance et ainsi affaiblir la robustesse du dispositif notamment vis-à-vis de la connexion libre à la première source présente, décrite au précédemment.

Le dispositif d'interconnexion 1 de l'invention peut également s'adapter à des actuateurs des appareils de commutation 3 et 4 dont les tensions de fonctionnement sont variables et différentes au travers des connecteurs 27 et de cavaliers E, F.

En effet, d'une part le dispositif inverseur de source peut être tripolaire (3 phases), ou tétrapolaire (trois phases L1, L2, L3 et un neutre N). D'autre part, les actuateurs des appareils de commutation 3 et 4 peuvent être choisis pour fonctionner avec une tension de 230VAC ou 400VAC, soit une tension phase-neutre ou une tension phase-phase. Le dispositif inverseur auxiliaire décrit à la figure 6 fonctionne donc même en l'absence de neutre mais permet de commuter deux phases L1, L2 et le neutre N éventuel.

Au moyen des connecteurs 27 et de cavaliers E et F, on peut d'une part alimenter les actuateurs entre phases L1, L2 (400VAC) ou entre phase L1 et neutre N (230VAC). D'autre part, dans le cas d'un dispositif inverseur de source tripolaire, le neutre n'existant pas, un autotransformateur externe D peut être raccordé sur le connecteur 27 et ainsi venir compléter le dispositif afin de recréer une tension de 230VAC.

Le dispositif d'interconnexion 1 de l'invention peut également intégrer des relais d'adaptation de tension pour simplifier l'interface entre le contrôleur électronique 2 et les appareils de commutation 3, 4. En effet, le dispositif d'interconnexion 1 peut comporter des relais électromécaniques qui permettront au contrôleur 2 dont tout ou partie des signaux de sortie seraient des signaux très basse tension (par exemple 24VDC) de venir activer des actuateurs fonctionnant en basse tension (par exemple 230VAC ou 400VAC). Le dispositif d'interconnexion 1 peut aussi comporter des relais électromécaniques qui permettront au contrôleur 2 dont tout ou partie des signaux de d'entrée seraient des signaux très basse tension (par exemple 24VDC) de venir s'interfacer sur des capteurs délivrant un signal en basse tension (par exemple 230VAC ou 400VAC).

Un pré-câblage du ou des relais d'adaptation de tension peut également être prévu, dans le but de permettre la détection par le contrôleur 2 du bon embrochage des connecteurs 5, 6 et 9, respectivement aux câbles ou nappes de câbles 16, 17, 15, au moyen d'au moins une boucle de courant qui passe par les connecteurs correspondant et qui est surveillée par le contrôleur 2. Dans une configuration qui combine toutes les possibilités mentionnées ci-dessus, le dispositif d'interconnexion 1 peut être utilisé avec mise en oeuvre ou non des options décrites, par la simple utilisation des connecteurs concernés avec les câbles ou nappes de câbles correspondant.

Ceci permet à la fois de rationaliser l'offre en un seul dispositif d'interconnexion 1, tout en autorisant, de manière sécurisée, toutes les variantes d'utilisation et de tension.

Tous les configurations possibles étant couvertes, l'installateur n'a pas recours au câblage classique pour des variantes d'installation moins courantes, et est donc assuré d'une bonne productivité et d'un résultat fiable et sécurisé, sans erreur ni panne cachée.

La présente description est donnée à titre d'exemple et n'est pas limitative de l'invention.

## Revendications

1. Dispositif d'interconnexion (1) destiné à sécuriser et faciliter, dans un dispositif inverseur de source, le raccordement d'un contrôleur (2) et d'au moins deux appareils de commutation (3, 4) aptes à assurer la commutation vers respectivement deux sources d'alimentation électrique, **caractérisé en ce qu'**il comprend un support (10), tel qu'une platine (10), sur lequel sont montés au moins deux connecteurs de source (5, 6) et au moins un connecteur de contrôle (9) destinés à permettre respectivement la connexion de deux appareils de commutation (3, 4) et d'un contrôleur (2) au dispositif d'interconnexion (1), et le support (10) comprend un pré-câblage des connecteurs de source (5, 6) et de contrôle (9) en sorte de permettre, lorsqu'un contrôleur (2) et deux appareils de commutation (3, 4) sont connectés au dispositif d'interconnexion (1) respectivement par les connecteurs de contrôle (9) et de source (5, 6), le contrôle par ledit contrôleur (2) de la commutation vers l'une ou l'autre de deux sources d'alimentation électrique via l'un ou l'autre des deux appareils de commutation (3, 4), **en ce que** le dispositif d'interconnexion comprend au moins un dispositif d'inversion auxiliaire (24, 25) monté sur le support (10) et comportant au moins un élément de commutation auxiliaire (24) et au moins un relais de contrôle (25), et **en ce que** le support (10) comprend un pré-câblage de ce dispositif d'inversion auxiliaire (24, 25), du connecteur de contrôle (9) et des deux connecteurs de source (5, 6), en sorte de permettre, lorsque deux appareils de commutation (3, 4) sont connectés au dispositif de d'interconnexion (1) respectivement par les connecteurs (5, 6), d'alimenter les circuits de contrôle commande et/ou un inter-verrouillage électrique des appareils de commutation (3, 4) dès que l'une des deux sources d'alimentation électrique est disponible, et, lorsqu'en outre un contrôleur (2) est connecté au dispositif d'interconnexion (1) par le connecteur de contrôle (9), et quand les deux sources sont disponibles, de sélectionner la source d'alimentation des circuits de contrôle commande des appareils de commutation (3, 4).

2. Dispositif de d'interconnexion (1) selon la revendication 1, **caractérisé en ce qu'**au moins un relais d'adaptation de tension est monté sur le support (10) et précablé de façon à permettre la transmission d'au moins un signal d'entrée ou sortie d'un contrôleur (2) connecté au support (10) par le connecteur (9) vers ou provenant de deux appareils de commutation (3, 4) connectés au support (10) respectivement par les connecteurs (5, 6), lorsque ce signal doit être isolé ou adapté en tension, notamment dans le cas de la transmission d'un signal basse tension provenant d'un des appareils de commutation (3, 4) vers une entrée très basse tension du contrôleur (2) ou d'un signal très basse tension provenant d'une sortie du contrôleur (2) vers une entrée de commande basse tension d'un des appareils de commutation (3, 4).

3. Dispositif d'interconnexion (1) selon l'une quelconque des revendications 1 et 2, **caractérisé en ce que** le support (10) comprend un pré-câblage du connecteur de contrôle (9) et des deux connecteurs de source (5, 6), en sorte de permettre, lorsqu'un contrôleur (2) et deux appareils de commutation (3, 4) sont connectés au dispositif d'interconnexion (1) respectivement par les connecteurs de contrôle (9) et de source (5, 6), l'inter-verrouillage des deux appareils de commutation (3, 4) interdisant la fermeture de l'un des deux appareils de commutation (3, 4) lorsque l'autre est déjà fermé et interdisant le couplage des deux sources d'alimentation reliées respectivement aux deux appareils de commutation (3, 4).

4. Dispositif d'interconnexion (1) selon la revendication 3, **caractérisé en ce que** le pré-câblage permettant l'inter-verrouillage comprend plusieurs contacts électriques et est réalisé en sorte de permettre de désactiver temporairement la fonction d'inter-verrouillage pré-câblée par ouverture de l'un desdits contacts électriques.

5. Dispositif d'interconnexion (1) selon l'une quelconque des revendications 1 à 4, **caractérisé en ce qu'**au moins un connecteur d'alimentation auxiliaire (28), destiné à permettre la connexion d'au moins un dispositif d'alimentation auxiliaire électrique (13), de préférence sécurisée, par exemple au moyen d'une batterie (14), au dispositif d'interconnexion (1), est monté sur le support (10), et **en ce que** le support (10) comprend un pré-câblage du connecteur d'alimentation auxiliaire (28) et du connecteur de contrôle (9) en sorte de permettre, lorsqu'un contrôleur (2) et un dispositif d'alimentation auxiliaire (13) sont connectés au dispositif d'interconnexion (1) respectivement par le connecteur de contrôle (9) et le connecteur d'alimentation auxiliaire (28), l'alimentation électrique du contrôleur (2).

6. Dispositif d'interconnexion (1) selon la revendication 5, **caractérisé en ce que** le support (10) comprend un pré-câblage du connecteur d'alimentation auxiliaire (28) et du connecteur de contrôle (9) en sorte de permettre, lorsqu'un contrôleur (9) et un dispositif d'alimentation auxiliaire (13) sont connectés au dispositif d'interconnexion (1) respectivement par le connecteur de contrôle (9) et le connecteur d'alimentation auxiliaire (28), la transmission au contrôleur (2) d'au moins un signal d'état provenant du dispositif d'alimentation sécurisée (13), tel qu'un signal de défaut de charge de la batterie (14).

7. Dispositif d'interconnexion (1) selon l'une quelconque des revendications 1 à 6, **caractérisé en ce qu'**il comprend au moins un connecteur de sélection de tension (27) monté sur le support (10), et **en ce que** le support (10) comprend un pré-câblage du connecteur de sélection de tension (27) et d'au moins un des connecteurs de source (5, 6), en sorte de permettre l'alimentation, sur plusieurs niveaux de tension, d'au moins l'appareils de commutation (3, 4) connecté au dispositif d'interconnexion (1) par ledit connecteur de source (5, 6).

8. Dispositif d'interconnexion (1) selon l'une quelconque des revendications précédentes, **caractérisé en ce qu'**au moins un des connecteurs de source (5, 6), de contrôle (9), et d'alimentation auxiliaire (28), et/ou un des relais d'adaptation de tension, est connecté à un câble, ou une nappe de câbles, de raccordement (16, 17, 15, 18) destiné à raccorder ledit connecteur (5, 6, 9, 28) respectivement à l'un des deux appareils de commutation (3, 4), au contrôleur (2), et au premier dispositif d'alimentation auxiliaire (13), et/ou à raccorder ledit relais à l'un des deux appareils de commutation (3, 4) et au contrôleur (2).

9. Dispositif d'interconnexion (1) selon la revendication 8, **caractérisé en ce que** la connexion du câble, ou de la nappe de câbles, de raccordement (16, 17, 15, 18) au connecteur (5, 6, 9, 28) ou au relais d'adaptation correspondant se fait par l'intermédiaire d'un connecteur détrompé, ou d'une cosse pré-repérée, en l'une des extrémités dudit câble, ou de ladite nappe de câbles, de raccordement (16, 17, 15, 18).

10. Dispositif d'interconnexion (1) selon l'une quelconque des revendications précédentes, **caractérisé en ce que** le support (10) comprend un pré-câblage des connecteurs de source (5, 6) et/ou de contrôle (9) et/ou d'alimentation auxiliaire (28), comprenant par exemple une boucle de courant passant par ledit ou lesdits connecteurs de source (5, 6), et/ou de contrôle (9), et/ou d'alimentation auxiliaire (28) et/ou par le relais d'adaptation, en sorte de permettre, lorsqu'un contrôleur (2) et/ou deux appareils de commutation (3, 4), et/ou un dispositif d'alimentation auxiliaire (13) sont connectés au support (10) au moyen d'un ou respectivement de plusieurs câbles, ou nappes de câbles, de raccordement (15, 16, 17, 18) connectés audit ou respectivement auxdits connecteurs de source (5, 6), et/ou de contrôle (9), et/ou d'alimentation auxiliaire (28), de détecter la bonne connexion du ou des câbles, ou nappes de câbles de raccordement (15, 16, 17, 18) audit ou respectivement auxdits connecteurs de source (5, 6), et/ou de contrôle (9) et/ou d'alimentation auxiliaire,(28) par monitorage de la boucle de courant par le contrôleur (2).

11. Dispositif inverseur de source (5) comprenant un contrôleur (2) et au moins deux appareils de commutation (3, 4) destinés à assurer la commutation vers respectivement deux sources d'alimentation électrique, le contrôleur (2) étant apte à contrôler le basculement d'une source vers l'autre en contrôlant les deux appareils de commutation (3, 4), **caractérisé en ce qu'**il comprend un dispositif d'interconnexion (1) selon l'une quelconque des revendications précédentes sur lequel sont connectés le contrôleur (2) et des deux appareils de commutation (3, 4) respectivement par les connecteurs de contrôle (9) et de source (5, 6), en sorte de permettre le contrôle par ledit contrôleur (2) de la commutation vers l'une ou l'autre de deux sources d'alimentation électrique via l'un ou l'autre des deux appareils de commutation (3, 4).

12. Réseau de distribution d'énergie électrique provenant de l'une ou l'autre de deux sources d'alimentation électrique, **caractérisé en ce qu'**il comprend un dispositif inverseur de source (5) selon la revendication 11, en sorte de permettre le basculement de l'une vers l'autre des deux sources d'alimentation électrique pour alimenter ledit réseau.

## Patentansprüche

1. Verbindungseinrichtung (1), die dazu dient, in einer Stromquellenumschaltvorrichtung die Verbindung einer Steuervorrichtung (2) und mindestens zweier Schaltgeräte (3, 4), die geeignet sind, das Schalten auf jeweils zwei elektrische Versorgungsquellen sicherzustellen, zu schützen und zu vereinfachen, umfassend einen Träger (10), wie eine Platine (10), auf dem mindestens zwei Stromquellenanschlüsse (5, 6) und mindestens ein Steueranschluss (9) montiert sind, die vorgesehen sind, jeweils die Verbindung von zwei Schaltgeräten (3, 4) und einer Steuervorrichtung (2) mit der Verbindungseinrichtung (1) zu ermöglichen, und der Träger (10) eine Vorverkabelung der Stromquellenanschlüsse (5, 6) und des Steueranschlusses (9) derart umfasst, dass, wenn eine Steuervorrichtung (2) und zwei Schaltgeräte (3, 4) mit der Verbindungseinrichtung jeweils über den Steueranschluss (9) und die Stromquellenanschlüsse (5, 6) verbunden sind, die Steuerung des Umschaltens zwischen der einen und der anderen der zwei elektrischen Versorgungsquellen über das eine oder das andere der zwei Schaltgeräte (3, 4) ermöglicht wird, **dadurch gekennzeichnet, dass** die Verbindungseinrichtung mindestens eine Hilfsumschaltvorrichtung (24, 25) umfasst, die auf dem Träger (10) montiert ist und mindestens ein Hilfsschaltelement (24) und mindestens ein Steuerrelais (25) aufweist, und dass der Träger (10) eine Vorverkabelung dieser Hilfsumschaltvorrichtung (24, 25), des Steueranschlusses (9) und der zwei Stromquellenanschlüsse (5, 6) umfasst, derart, dass, wenn zwei Schaltgeräte (3, 4) mit der Verbindungseinrichtung (1) jeweils über die Anschlüsse (5, 6) verbunden sind, ermöglicht wird, die Überwachungssteuerkreise und/oder eine elektrische Verriegelung der Schaltgeräte (3, 4) zu versorgen, sobald eine der zwei elektrischen Versorgungsquellen verfügbar ist, und wenn außerdem eine Steuervorrichtung (2) mit der Verbindungseinrichtung (1) über den Steueranschluss (9) verbunden ist und wenn die zwei Quellen verfügbar sind, die Versorgungsquelle der Überwachungssteuerkreise der Schaltgeräte (3, 4) auszuwählen.

2. Verbindungseinrichtung (1) nach Anspruch 1, **dadurch gekennzeichnet, dass** mindestens ein Relais zur Anpassung der Spannung auf dem Träger (10) montiert und vorverdrahtet ist, um die Übertragung mindestens eines Eingangs- oder Ausgangssignals einer Steuervorrichtung (2), die über den Anschluss (6) mit dem Träger (10) verbunden ist, zu oder von den zwei Steuergeräten (3, 4), die jeweils über die Anschlüsse (5, 6) mit dem Träger (10) verbunden sind, zu ermöglichen, wenn dieses Signal getrennt oder spannungsmäßig angepasst werden muss, insbesondere in dem Fall der Übertragung eines Niederspannungssignals, das von einem der Schaltgeräte (3, 4) geliefert wird, zu einem Eingang sehr niedriger Spannung der Steuervorrichtung (2), oder eines Signals sehr niedriger Spannung, das von einem Ausgang der Steuervorrichtung (2) geliefert wird, zu einem Steuereingang niedriger Spannung eines der Schaltgeräte (3, 4).

3. Verbindungseinrichtung (1) nach einem beliebigen der Ansprüche 1 und 2, **dadurch gekennzeichnet, dass** der Träger (10) eine Vorverdrahtung des Steueranschlusses (9) und der zwei Stromquellenanschlüsse (5, 6) umfasst, derart, dass, wenn eine Steuervorrichtung (2) und zwei Schaltgeräte (3, 4) mit der Verbindungseinrichtung (1) jeweils über den Steueranschluss (9) und die Stromquellenanschlüsse (5, 6) verbunden sind, die Verriegelung der zwei Steuergeräte (3, 4) ermöglicht wird, wobei das Schließen eines der zwei Steuergeräte (3, 4) verhindert wird, wenn das andere schon geschlossen ist, und die Kopplung der zwei Versorgungsquellen, die jeweils mit den zwei Schaltgeräten (3, 4) verbunden sind, verhindert wird.

4. Verbindungseinrichtung (1) nach Anspruch 3, **dadurch gekennzeichnet, dass** die Vorverdrahtung, die die Verriegelung ermöglicht, mehrere elektrische Kontakte umfasst und derart hergestellt ist, dass temporär die Funktion der vorverkabelten Verriegelung durch das Öffnen eines der elektrischen Kontakte deaktiviert werden kann.

5. Verbindungseinrichtung (1) nach einem beliebigen der Ansprüche 1 bis 4, **dadurch gekennzeichnet, dass** mindestens ein Hilfsversorgungsanschluss (28), der vorgesehen ist, die Verbindung mindestens einer elektrischen Hilfsversorgungsvorrichtung (13), vorzugsweise gesichert, beispielsweise mittels einer Batterie (14), mit der Verbindungseinrichtung (1) zu ermöglichen, auf dem Träger (10) montiert ist und dass der Träger (10) eine Vorverdrahtung des Hilfsversorgungsanschlusses (28) und des Steueranschlusses (9) umfasst, derart, dass, wenn eine Steuervorrichtung (2) und eine Hilfsversorgungsvorrichtung (13) mit der Verbindungseinrichtung (1) jeweils über den Steueranschluss (9) und den Hilfsversorgungsanschluss (28) verbunden werden, die elektrische Versorgung der Steuervorrichtung (2) ermöglicht wird.

6. Verbindungseinrichtung (1) nach Anspruch 5, **dadurch gekennzeichnet, dass** der Träger (10) eine Vorverdrahtung des Hilfsversorgungsanschlusses (28) und des Steueranschlusses (9) umfasst, derart, dass, wenn eine Steuervorrichtung (9) und eine Hilfsversorgungsvorrichtung (13) mit der Verbindungseinrichtung (1) jeweils über den Steueranschluss (9) und den Hilfsversorgungsanschluss (28) verbunden werden, die Übertragung mindestens eines Zustandssignals, das von der gesicherten Versorgungsvorrichtung (13) herrührt, wie ein Signal eines Ladefehlers der Batterie (14), ermöglicht wird.

7. Verbindungseinrichtung (1) nach einem beliebigen der Ansprüche 1 bis 6, **dadurch gekennzeichnet, dass** sie mindestens einen Spannungsauswahlanschluss (27), der auf dem Träger (10) montiert ist, umfasst und dass der Träger (10) eine Vorverdrahtung des Spannungsauswahlanschlusses (27) und mindestens eines Anschlusses der Stromquellenanschlüsse (5, 6) umfasst, derart, dass die Versorgung mindestens des Schaltgeräts (3, 4) über mehrere Spannungsniveaus ermöglicht wird, das mit der Verbindungseinrichtung (1) über den Stromquellenanschluss (5, 6) verbunden ist.

8. Verbindungseinrichtung (1) nach einem beliebigen der vorhergehenden Ansprüche, **dadurch gekennzeichnet, dass** mindestens einer der Stromquellenanschlüsse (5, 6), des Steueranschlusses (9) und des Hilfsversorgungsanschlusses (28) und/oder eines der Spannungsanpassungsrelais mit einem Anschlusskabel oder einem Flachbandanschlusskabel (16, 17, 18, 19) verbunden ist, das vorgesehen ist, den Anschluss (5, 6, 9, 28) jeweils an eines der Schaltgeräte (3, 4), an die Steuervorrichtung (2) und an die erste Hilfsversorgungsvorrichtung (13) anzuschließen und/oder das Relais an eines der zwei Schaltgeräte (3, 4) und an die Steuervorrichtung (2) anzuschließen.

9. Verbindungseinrichtung (1) nach Anspruch 8, **dadurch gekennzeichnet, dass** die Verbindung des Anschlusskabels oder des Flachbandanschlusskabels (16, 17, 15, 18) mit dem Anschluss (5, 6, 9, 28) oder dem korrespondierenden Anpassungsrelais mittels eines kodierten Anschlusses oder einer vormarkierten Anschlusshülse an einem der Enden des Anschlusskabels oder des Flachbandanschlusskabels (16, 17, 15, 18) durchgeführt wird.

10. Verbindungseinrichtung (1) nach einem beliebigen der vorhergehenden Ansprüche, **dadurch gekennzeichnet, dass** der Träger (10) eine Vorverdrahtung der Stromquellenanschlüsse (5, 6) und/oder des Steueranschlusses (9) und/oder des Hilfsversorgungsanschlusses (28) aufweist, die zum Beispiel eine Stromschleife umfasst, die durch die Stromquellenanschlüsse (5, 6) und/oder den Steueranschluss (9) und/oder den Hilfsversorgungsanschluss (28) und/oder das Anpassungsrelais hindurchgeht, derart, dass, wenn eine Steuervorrichtung (2) und/oder zwei Schaltgeräte (3, 4) und/oder eine Hilfsversorgungsvorrichtung (13) mit dem Träger (10) mittels eines oder jeweils mehrerer Anschlusskabel oder Flachbandanschlusskabel (15, 16, 17, 18) verbunden sind, die mit jeweils den Stromquellenanschlüssen (5, 6) und/oder dem Steueranschluss (9) und/oder dem Hilfsversorgungsanschluss (28) verbunden sind, die Detektion einer guten Verbindung des oder der Anschlusskabel oder Flachbandanschlusskabel (15, 16, 17, 18) jeweils mit den Stromquellenanschlüssen (5, 6) und/oder dem Steueranschluss (9) und/oder dem Hilfsversorgungsanschluss (28) durch Überwachung der Stromschleife durch die Steuervorrichtung (2) ermöglicht wird.

11. Stromquellenumschaltvorrichtung (5), eine Steuervorrichtung (2) und mindestens zwei Schaltgeräte (3, 4) umfassend, die vorgesehen sind, die Umschaltung zwischen jeweils zwei elektrischen Versorgungsquellen sicherzustellen, wobei die Steuervorrichtung (2) geeignet ist, die Umschaltung von einer Quelle zur anderen durch Überwachen der zwei Schaltgeräte (3, 4) zu steuern, **dadurch gekennzeichnet, dass** sie eine Verbindungseinrichtung (1) nach einem beliebigen der vorhergehenden Ansprüche umfasst, auf der die Steuervorrichtung (2) und die zwei Schaltgeräte (3, 4) jeweils über den Steueranschluss (9) und die Stromquellenanschlüsse (5, 6) verbunden sind, derart, dass die Steuerung der Umschaltung zu der einen oder der anderen der zwei elektrischen Versorgungsquellen über das eine oder das andere der zwei Schaltgeräte (3, 4) ermöglicht wird.

12. Netz zur Verteilung von elektrischer Energie, die von der einen oder der anderen von zwei elektrischen Versorgungsquellen geliefert wird, **dadurch gekennzeichnet, dass** es eine Stromquellenumschaltvorrichtung (5) nach Anspruch 11 umfasst, derart, dass die Umschaltung von der einen zu der anderen der zwei elektrischen Versorgungsquellen zur Versorgung des Netzes ermöglicht wird.

## Claims

1. Interconnection device (1) for securing and facilitating, in a source inverter, the connection of a controller (2) and at least two switching devices (3, 4) capable of effecting switching to two electric power supply sources, comprising a support (10), such as a circuit board (10), on which there are mounted at least two source connectors (5, 6) and at least one control connector (9) which are to permit the connection of two switching devices (3, 4) and of a controller (2) to the interconnection device (1), the support (10) comprising pre-wiring for the source connectors (5, 6) and the control connector (9) so as to permit, when a controller (2) and two switching devices (3, 4) are connected to the interconnection device (1) by the control connector (9) and the source connectors (5, 6), respectively, control by said controller (2) of the switching to one or the other of two electric power supply sources *via* one or the other of the two switching devices (3, 4), **characterised in that**
the interconnection device comprises at least one auxiliary inversion device (24, 25) mounted on the support (10) and having at least one auxiliary switching element (24) and at least one control relay (25), and **in that** the support (10) comprises pre-wiring for the auxiliary inversion device (24, 25), the control connector (9) and the two source connectors (5, 6) so as to permit, when two switching devices (3, 4) are connected to the interconnection device (1) by the connectors (5, 6), the supply of power to the control-command circuits and/or electrical interlocking of the switching devices (3, 4) as soon as one of the two electric power supply sources is available, and, when a controller (2) is further connected to the interconnection device (1) by the control connector (9), and when the two sources are available, selection of the power supply source of the control-command circuits for the switching devices (3, 4).

2. Interconnection device (1) according to claim 1, **characterised in that** at least one voltage adaptation relay is mounted on the support (10) and pre-wired so as to permit the transmission of at least one input or output signal of a controller (2) connected to the support (10) by the connector (9) towards or coming from two switching devices (3, 4) connected to the support (10) by the connectors (5, 6) when that signal must be isolated or adapted in terms of voltage, especially in the case of the transmission of a low voltage signal coming from one of the switching devices (3, 4) to a very low voltage input of the controller (2) or of a very low voltage signal coming from an output of the controller (2) to a low voltage command input of one of the switching devices (3, 4).

3. Interconnection device (1) according to either claim 1 or claim 2, **characterised in that** the support (10) comprises pre-wiring for the control connector (9) and the two source connectors (5, 6) so as to permit, when a controller (2) and two switching devices (3, 4) are connected to the interconnection device (1) by the control connector (9) and the source connectors (5, 6), respectively, interlocking of the two switching devices (3, 4) preventing closure of one of the two switching devices (3, 4) when the other is already closed and preventing coupling of the two power supply sources connected to the two switching devices (3, 4).

4. Interconnection device (1) according to claim 3, **characterised in that** the pre-wiring permitting interlocking comprises a plurality of electrical contacts and is produced so as to allow temporary deactivation of the pre-wired interlocking function by opening one of said electrical contacts.

5. Interconnection device (1) according to any one of claims 1 to 4, **characterised in that** there is mounted on the support (10) at least one auxiliary power supply connector (28), which is to permit the connection to the interconnection device (1) of at least one auxiliary electric power supply device (13), which auxiliary power supply is preferably secured, for example by means of a battery (14), and **in that** the support (10) comprises pre-wiring for the auxiliary power supply connector (28) and the control connector (9) so as to permit, when a controller (2) and an auxiliary power supply device (13) are connected to the interconnection device (1) by the control connector (9) and the auxiliary power supply connector (28), respectively, the supply of electric power to the controller (2).

6. Interconnection device (1) according to claim 5, **characterised in that** the support (10) comprises pre-wiring for the auxiliary power supply connector (28) and the control connector (9) so as to permit, when a controller (9) and an auxiliary power supply device (13) are connected to the interconnection device (1) by the control connector (9) and the auxiliary power supply connector (28), respectively, transmission to the controller (2) of at least one status signal coming from the secured power supply device (13), such as a signal indicating a lack of charge of the battery (14).

7. Interconnection device (1) according to any one of claims 1 to 6, **characterised in that** it comprises at least one voltage selection connector (27) mounted on the support (10), and **in that** the support (10) comprises pre-wiring for the voltage selection connector (27) and at least one of the source connectors (5, 6) so as to permit the supply of power, at a plurality of voltage levels, to at least the switching device (3, 4) connected to the interconnection device (1) by said source connector (5, 6).

8. Interconnection device (1) according to any one of the preceding claims, **characterised in that** at least one of the source connectors (5, 6), the control connector (9) and the auxiliary supply connector (28), and/or one of the voltage adaptation relays, is connected to a connecting wire or a group of connecting wires (16, 17, 15, 18) for connecting said connector (5, 6, 9, 28) to one of the two switching devices (3, 4), to the controller (2) and to the first auxiliary power supply device (13), respectively, and/or for connecting said relay to one of the two switching devices (3, 4) and to the controller (2).

9. Interconnection device (1) according to claim 8, **characterised in that** the connection of the connecting wire or group of connecting wires (16, 17, 15, 18) to the corresponding connector (5, 6, 9, 28) or adaptation relay is effected by way of a coded connector, or a pre-identified terminal, at one of the ends of said connecting wire or group of connecting wires (16, 17, 15, 18).

10. Interconnection device (1) according to any one of the preceding claims, **characterised in that** the support (10) comprises pre-wiring for the source connectors (5, 6) and/or control connector (9) and/or auxiliary power supply connector (28), comprising, for example, a current loop passing through said source connectors (5, 6) and/or control connector (9) and/or auxiliary power supply connector (28) and/or through the adaptation relay so as to permit, when a controller (2) and/or two switching devices (3, 4) and/or an auxiliary power supply device (13) are connected to the support (10) by means of one or a plurality of connecting wires or groups of connecting wires (15, 16, 17, 18) connected to said source connectors (5, 6) and/or control connector (9) and/or auxiliary power supply connector (28), detection of a good connection of the connecting wire(s) or group(s) of connecting wires (15, 16, 17, 18) to said source connectors (5, 6) and/or control connector (9) and/or auxiliary power supply connector (28) by monitoring of the current loop by the controller (2).

11. Source inverter device (5) comprising a controller (2) and at least two switching devices (3, 4) for effecting switching to two electric power supply sources, the controller (2) being capable of controlling the changeover from one source to the other by controlling the two switching devices (3, 4), **characterised in that** it comprises an interconnection device (1) according to any one of the preceding claims to which the controller (2) and the two switching devices (3, 4) are connected by the control connector (9) and the source connectors (5, 6), respectively, so as to allow said controller (2) to control the switching to one or the other of two electric power supply sources *via* one or the other of the two switching devices (3, 4).

12. Network for the distribution of electrical energy coming from one or the other of two electric power supply sources, **characterised in that** it comprises a source inverter device (5) according to claim 11, so as to permit the changeover from one of the two electric power supply sources to the other in order to supply said network.
